(19) Europäisches Patentamt
European Patent Office
Office européen des brevets

(11) **EP 0 537 724 B1**

(12) **EUROPÄISCHE PATENTSCHRIFT**

(45) Veröffentlichungstag und Bekanntmachung des Hinweises auf die Patenterteilung:
05.06.1996 Patentblatt 1996/23

(51) Int. Cl.$^6$: **B60T 8/32**

(21) Anmeldenummer: 92117574.1

(22) Anmeldetag: 15.10.1992

(54) **Verfahren zur Bremskraftregelung von Motorrädern**

Procedure for controlling the braking force of motorbikes

Procédé pour régler la force de freinage de motos

(84) Benannte Vertragsstaaten:
DE FR GB IT

(30) Priorität: 21.10.1991 DE 4134675

(43) Veröffentlichungstag der Anmeldung:
21.04.1993 Patentblatt 1993/16

(73) Patentinhaber:
• Fahrzeugtechnik Ebern GmbH
D-96106 Ebern (DE)
• Bayerische Motoren Werke Aktiengesellschaft
80788 München (DE)

(72) Erfinder:
• Roll, Georg, Dr.
W-6056 Heusenstamm (DE)
• Ohm, Hein-F.
W-6108 Weiterstadt (DE)
• Hauser, Berthold
W-8091 Jakobsneuharting (DE)

(74) Vertreter: Oppermann, Ewald, Dipl.-Ing.
Am Wiesengrund 35
63075 Offenbach (DE)

(56) Entgegenhaltungen:
EP-A- 0 398 360          DE-A- 3 530 280
GB-A- 2 134 200

## Beschreibung

Die Erfindung betrifft ein Verfahren und eine Vorrichtung zur Bremskraftregelung nach dem Oberbegriff des Anspruchs 1.

Aus der DE-A-3 530 280 ist ein Verfahren zum blockiergeschützten Abbremsen eines Kraftfahrzeuges bekannt. Dabei wird durch Volumenänderung eines räumlich abgeschlossenen Systems z. B. durch verschieben eines Druckentlastungskolbens der Bremsdruck im Radzylinder des überbremsten zum Blockieren neigender Rades reduziert.

Zweiräderige Fahrzeuge neigen bei extremen Bremsverzögerungen dazu, am Heck abzuheben, da sich das gesamte Fahrzeuggewicht auf das Vorderrad verlagert. Durch den Verlust der Bodenaufstandskraft und damit aller Seitenführungskräfte ist das Hinterrad nicht mehr in der Lage, dem gehremsten Fahrzeug eine hinreichende Richtungsstabilität zu verleihen. In extremen Fällen kann durch leichtes Kippen des Fahrzeugs um die Vorderachse eine Schwerpunktverlagerung nach oben und nach vorn erfolgen, wodurch ein noch stärkeres Kippen angeregt wird, was wiederum eine noch ungünstigere Schwerpunktverlagerung zur Folge hat. Dieser Mitkopplungseffekt führt dazu, daß sich ein abhebegefährdetes Fahrzeug innerhalb eines kurzen Zeitintervalls um einen großen Kippwinkel (> 45°) aufstellen kann und für den Fahrer plötzlich unbeherrachbar wird. Zu dem tritt die verursachende starke Fahrzeugverzögerung vorwiegend in einer Gefahrensituation auf, die meist schon die ganze Konzentration des Fahrers in Anspruch nimmt.

Die Gefahr des Fahrzeugabhebens wird durch neue Reifencharakteristika, deren $\mu$-Schlupfkurve ein ausgeprägtes Maximum erzielen, sowie durch Antiblockiersysteme, die das Schlupfkurvenmaximum ständig ausnutzen, noch erhöht.

Aus der DE-A-2 133 547 ist eine Bremskraftregelung für Kraftfahrzeuge bekannt, bei der eine zusätzliche logische Verknüpfung vorgesehen ist, welche den Druck an den Vorderradbremsen absenkt, wenn innerhalb einer bestimmten Wartezeit ein die Bodenhaftung der Hinterräder symbolisierendes Signal nicht eintritt.

Eine solche Bremskraftregelung ist vielleicht für Nutzkraftfahrzeuge geeignet, da aufgrund ihrer großen Masse eine beträchtliche Zeit zur Verfügung steht, um die Gefahr des Abhebens der Hinterachse zu erkennen und dagegen zu steuern.

Außerdem haben vierrädrige Kraftfahrzeuge nur ein Bremssystem, d.h. beim Betätigen werden Vorderachse und Hinterachse gleichzeitig gebremst. Wenn die Bremse stark betätigt wird, was auf gut greifendem Untergrund zu einem Abheben des Fahrzeugshecks führen kann, liegen mit Sicherheit auch an den Hinterrädern hohe Bremskräfte vor, die sofort starke Blockiertendenzen verursachen und das Anheben eindeutig, nur durch Betrachtung des (fehlenden) Wiederanlaufverhaltens des Hinterrades, erkennbar machen.

Für Motorräder ist eine derartige Bremskraftregelung aber nicht geeignet, da dort die Verhältnisse viel komplizierter sind. Zum einen läuft das Abheben wegen der kleineren Massen wesentlich schneller ab, zum anderen verfügen Motorräder über zwei voneinander unabhängig betätigbare Bremskreise.

Damit ist es möglich, ein Fahrzeug allein mit der Vorderradbremse so stark zu verzögern, daß ein Abheben des Hecks auftritt, während die Hinterradbremse völlig unabhängig davon den Verlauf der Hinterradgeschwindigkeit beeinflussen kann. In Kombination mit einem nicht ausgekuppelten Antrieb können nahezu beliebige Hinterradgeschwindigkeiten erzwungen werden.

Bei der Abhebe-Erkennung müssen möglichst alle relevanten Radgeschwindigkeitsmuster eindeutig erkannt werden, d.h. es sollten einerseits alle während einer jeden Bremsung tatsächlich auftretenden Abhebefälle sicher erkannt werden, andererseits sollte nie unbegründeterweise Abheben erkannt werden, um ein unberechtigtes Unterbremsen zu vermeiden.

Es ist deshalb Aufgabe der Erfindung, ein Verfahren und eine Vorrichtung der eingangs genannten Art aufzuzeigen, das die Gefahr des Abhebens deutlich vermindert. Dabei soll mit einfachen Mitteln das herkömmliche Antiblockiersystem um eine Anti-Abhebe-Einrichtung ergänzbar sein und das Motorrad mit einem optimalen Bremsweg abzubremsen sein.

Die Lösung dieser Aufgabe gelingt mit mit den im kennzeichnenden Teil des Anspruchs 1 angegebenen Maßnahmen. Eine Vorrichtung zur Durchführung des erfindungsgemäßen Verfahrens ist im Anspruch 10 angegeben.

Das erfindungsgemäße Verfahren benötigt keinerlei zusätzliche elektromechanische Geber oder Sensoren, die etwa die Stärke der Hinterradausfederung meßtechnisch erfassen und für den Regler verfügbar machen, sondern benutzt die Auswertung der Radgeschwindigkeitsmuster zur Erkennung der Abhebegefährdung.

Zur Erfassung der Radumfangsgeschwindigkeiten wird die von herkömmlichen Antiblockiersystemen bekannte und am Motorrad schon vorhandene Radsensorik benutzt.

Dabei sind folgende Fälle zu unterscheiden:

a. ungebremstes oder beschleunigend angetriebenes Hinterrad Ein ungebremstes Hinterrad hat beim Abheben des Motorradhecks das Bestreben, seine Geschwindigkeit beizubehalten. Lediglich die Reibung in der Lagerung führt zu einer leichten Verzögerung der Radumfangsgeschwindigkeit. Dabei geht man zunächst davon aus, daß der Fahrzeugantrieb ausgekuppelt ist, so daß keine motorbedingten Beschleunigungen oder Verzögerungen auftreten können. Die Geschwindigkeit des ungebremsten Hinterrades entfernt sich nach oben von der Geschwindigkeit des Vorderrades. Nach kurzer Zeit treten also eine Differenz delta $\_V = V1 - VO$ sowie eine Divergenz delta $\_A = dV1/dt - dVO/dt$ auf, die in Zusammenhang mit einer hohen Fahrzeugverzögerung (z.B. > 0.8g) als Abheben gedeutet werden können.

Sollte die Beschleunigung des Hinterrades und die dadurch detektierte Geschwindigkeitsdivergenz durch den nicht ausgekuppelten Motorantrieb hervorgerufen werden, so ist die Maßnahme der Vorderraddruckreduzierung trotzdem angebracht, um mehr Aufstandskraft am Hinterrad zu erwirken.

b. gebremstes oder verzögernd angetriebenes Hinterrad

Ein gebremstes Rad, das eine zu geringe (oder keine) Bodenhaftung hat, weist eine starke Blockiertendenz auf. Selbst wenn der Bremsdruck durch das ABS gegen 0 reduziert wird, "erholt" sich das Rad nicht oder erst nach langer Zeit. Bei einer hohen Fahrzeugverzögerung (z.B. > 0.9g) muß man aber von einem großen Reibwert zwischen Reifen und Fahrbahn ausgehen und demgemäß eine deutliche Radbeschleunigung bei entsprechender Entlastung erwarten. Findet diese nicht statt, so kann man von einem Rad mit geringer Aufstandskraft ausgehen. Entsprechend muß der Vorderradbremsdruck reduziert werden, bis eine Hinterradausregelung möglich ist.

Sollte ein eingekuppelter Motor die Ursache für den nicht ausregelbaren Hinterradgeschwindigkeitseinbruch sein, so ist die Maßnahme der Vorderradentlastung ebenfalls korrekt, da die Aufstandskraft am Hinterrad für den vorliegenden Betriebsfall eindeutig zu gering ist. Eine Erhöhung der Aufstandskraft, die zu einer Ausregelung des Hinterradeinbruchs und verbesserter Fahrzeugstabilität führt, kann nur durch eine verringerte Fahrzeugverzögerung, also durch eine Vorderraddruckentlastung herbeigeführt werden.

c. Grenzfälle

Es gibt verschiedene Grenzfälle, die weniger eindeutige Geschwindigkeitsmuster zur Folge haben als in a) und b) und deshalb schwieriger zu erkennen sind.

So kann der Fall eintreten, daß ein gebremstes bereits abhebendes Hinterrad vom ABS-Regler druckentlastet wird, so daß die Radgeschwindigkeit in den Bereich der berechneten Fahrzeug-Referenzgeschwindigkeit hochläuft.

Der ABS-Regler stellt daraufhin fest, daß sich das Rad wieder in einem akzeptablen Schlupf befindet und erneut belastet werden darf. Normalerweise würde nun auch kein Abheben des Rades erkannt werden, da sich der Geschwindigkeitseinbruch ja ausregeln lassen würde. Tatsächlich befindet sich das Rad aber in einem "Schwebezustand", in des die Geschwindigkeit zufällig kurzfristig in den korrekten Wertebereich läuft. Ohne nachfolgenden Druckaufbau würde die Radgeschwindigkeit nach kurzer Zeit nach oben divergieren, und es könnte Fall a) erkannt werden. Mit Druckaufbau würde die Radgeschwindigkeit sofort wieder einbrechen, so daß Fall b) sichtbar würde.

In beiden Fällen träte aber eine vermeidbare Verzögerung in der Reaktion auf. Daß ein Abhebefall vorliegt, kann tatsächlich schon deutlich früher erkannt werden. Dazu muß man die Forderung aufstellen, daß sich ein Rad bei gutem Reibbeiwert durch Druckreduzierung immer stark beschleunigen lassen muß. Tritt auch im Ausregelfall kein definierter Radhochlauf ein, so muß man von mangelndem Bodenkontakt des Rades ausgehen.

Es muß daher generell am Ende einer ABS-Ausregelphase am Hinterrad eine hinreichend große Radbeschleunigung auftreten, damit ein Abhebefall ausgeschlossen werden kann.

Die Erfindung soll anhand der Figuren näher erläutert werden.
Es zeigen:

Figur 1
schematisch die Schwerpunktverlagerung bei einem durch hohe Bremsverzögerung am Hinterrad abhebenden Zweiradfahrzeug,

Figur 2
ein Radgeschwindigkeitsmuster, das auf ein abhebendes Hinterrad hindeutet, das ungebremst läuft,

Figur 3
ein Radgeschwindigkeitsmuster, das auf ein abhebendes Hinterrad hindeutet, das mit Bremsdruck oder eingekuppeltem Motor läuft,

Figur 4
ein Radgeschwindigkeitgmuster, das auf ein abhebendes Hinterrad hindeutet, das mit Bremsdruck oder eingekuppeltem Motor zufällig in einen stabilen Schlupf einläuft,

Figur 5 , 5a, 5b, 5c, 5e, 5f:
ein Schaltschema zur Realisierung des Abhebe-Erkennungs- und Ausregelungsmechenismus,

**Figur 6**

den zeitlichen Ablauf eine unausgeregelten Fahrzeugabhebens: Kippwinkel in Abhängigkeit des Vorderrad-Bremsdrucks,

**Figur 7**

den zeitlichen Ablauf eines ausgeregelten Fahrzeugabhebens: Kippwinkel in Abhängigkeit des Vorderrad-Bremsdrucks, und

**Figur 8**

schematisch eine Vorrichtung zur Durchführung des Verfahrens.

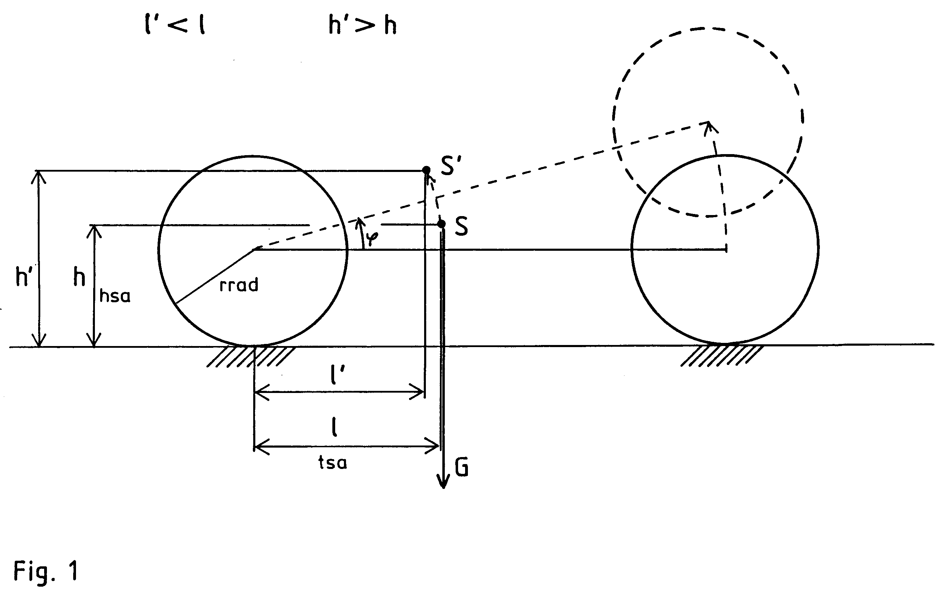

In Figur 1 ist das Gesamtgewicht des Motorrads min G bezeichnet, welches im Schwerpunkt S angreift. S' bezeichnet den verlagerten Schwerpunkt, wenn beim Abheben des Hinterrades (gestrichelt gezeichnet) die gedachte Verbindungslinie um den Kippwinkel Phi schwenkt. Der Radius des Vorderrades ist mit rrad bezeichnet.

Wie schon erwähnt wurde, kann das Kippen eines abhebegefährdeten Fahrzeugs aufgrund von Mitkopplungseffekton innerhalb eines sehr kurzen Zeitintervalls erfolgen.

Um das Kippen des Fahrzeugs numerisch zu erfassen, kann die nachfolgende Bewegungsgleichung verwendet werden, die das Drehen des Fahrzeugs um die Vorderradachse beschreibt. Dabei wird hier vereinfachend von einem ungefederten Fahrzeug ausgegangen.

$$DDPHIA = (M*((HSA-RRAD) * A-TSA*G) + BREMSK*PO)/THETA$$

Dabei bedeuten:
DDPHIA = Zweifache Ableitung des Kippwinkels bezogen auf die Vorderradachse
M = Gesamtmasse des Motorrads
G = Gesamtgewicht des Motorrads
HSA = Höhe des Fahrzeugschwerpunkts über dem Vorderradaufstandspunkt
TSA = horziontale Entfernung des Fahrzeugschwerpunkts vom Vorderradaufstandspunkt
RRAD = Radius des Vorderrades
A = Verzögerung des Fahrzeugschwerpunkts in horizontaler Richtung
BREMSK = Bremsenkonstante, die einen Zusammenhang herstellt zwischen dem Vorderradbremsdruck und der Vorderradbremskraft
PO = Vorderradbremsdruck
THETA = Massenträgheitsmoment des Motorrades bezüglich der Rotation um die Vorderachse.

Auf der Basis dieser Gleichung läßt sich der Abhebevorgang unter Vorgabe bestimmter Fahrzeugdaten simulieren, wobei man über der Zeit stetig den Bremsdruck erhöht.

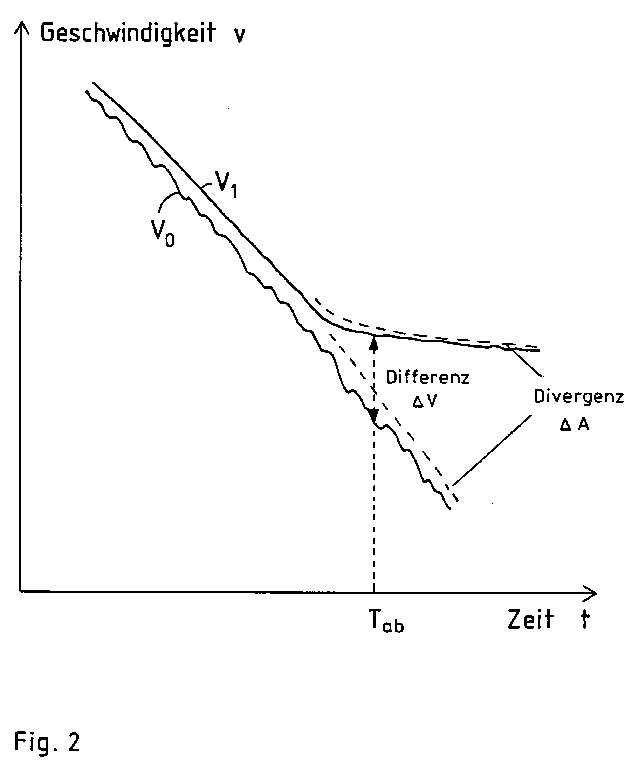

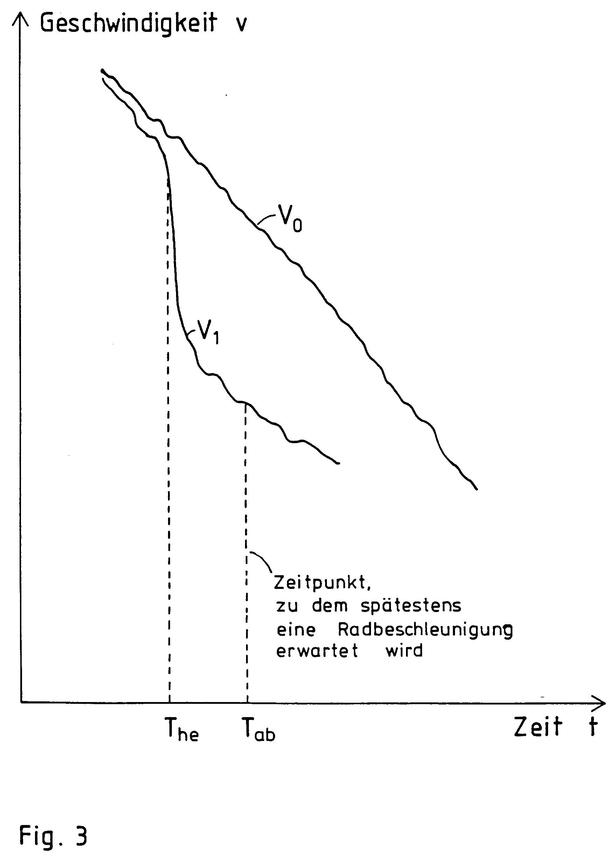

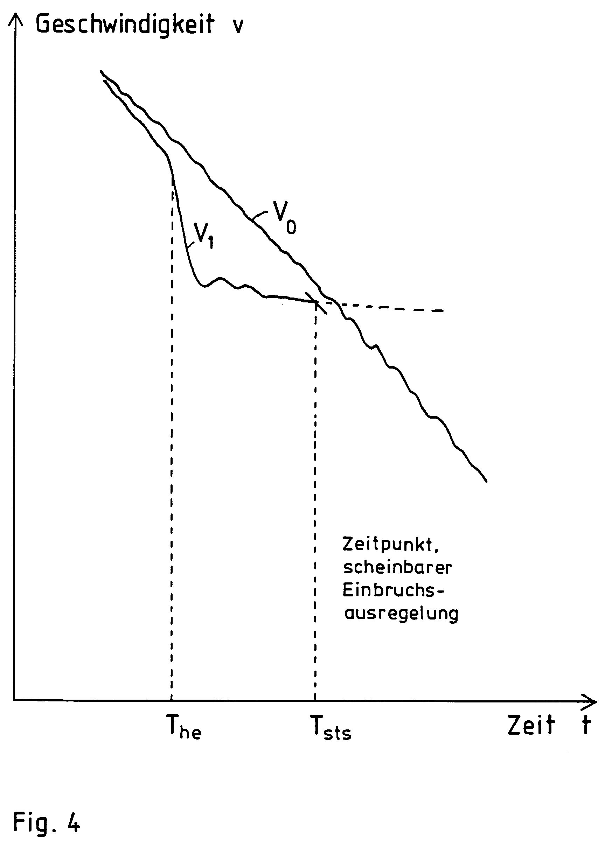

In Figur 2, 3 und 4 sind die Radgeschwindigkeitsmuster in den Abhebefällen a, b und c dargestellt. Darin bedeutet VO die Vorderrad-Momentangeschwindigkeit, V1 die Hinterradmomentangeschwindigkeit und Tab, The und Tsts: Zeitpunkt des Abhebens, Zeitpunkt des Hinterradeinbruchs $T_{STS}$ Zeitpunkte des Einlaufs in den stabilen Schlupf.

Figur 5 und Figur 5a bis 5f zeigt ein Blockschaltbild der Antiabhebe-Einrichtung, die als Eingangsgrößen die Signale der Radsensoren 1,2 sowie ein Drucksignal bzw. druckproportionales Signal 3, das den Vorderradbremsdruck repräsentiert, überwacht.

Die verwendeten Variablen und Konstanten bedeuten dabei:
SO = Signal vom induktiven Vorderradsensor, das eine Bestimmung der aktuellen Vorderrad-Umfangsgeschwindigkeit ermöglicht
S1 = Signal vom induktiven Hinterradsensor, das eine Bestimmung der aktuellen Hinterrad-Umfangsgeschwindigkeit ermöglicht
VO = Vorderrad-Momentangeschwindigkeit (aus den Radsensorsignalen bildet ein ABS-Regler in jedem Regelungszyklus die momentane Radumfangsgeschwindigkeit)
V1 = Hinterrad-Momentangeschwindigkeit
AO = gefilterte Vorderradverzögerung/-beschleunigung
A1 = gefilterte Hinterradverzögerung/-beschleunigung
VREF = berechnete Fahrzeugreferenzgeschwindigkeit (wird aus gefilterten Radgeschwindigkeiten und Plausibilitätsüberlegungen gebildet)
AREF = gefilterte Fahrzeugverzögerung - zeitliche Ableitung von VREF (liefert eine geschätzte Fahrzeugverzögerung, die aufgrund der kurzen Regelungszykluszeiten allerdings sehr stark schwankt: aus diesem Grunde erfolgt allgemein eine Filterung dieses Signals; AREF wird als eine derartige gefilterte Fahrzeugverzögerung angenommen)
VRE = Anzeigesignal für Vorderrad-Geschwindigkeitseinbruch (boolesches 1-bit-Signal, das auf logisch '1' gesetzt wird, wenn die Vorderradgeschwindigkeit überbremsungsbedingt in einen zu großen Schlußbereich einläuft, und logisch '0' wird, wenn der aktuelle Radschlupf stabil ist)

HRE = Anzeigesignal für Hinterrad-Geschwindigkeitseinbruch

Jitter0 = Anzeigesignal für Vorderradjitter (boolesches 1-bit-Signal, das auf logisch '1' liegt, wenn am Vorderrad starker Jitter festgestellt wird oder kurz vorher festgestellt wurde)

PO = Radbremszylinderdruck am Vorderrad (dieser Druck wird bei der Regelbremsung vom ABS-Regler eingestellt; die hier vorgestellten Mechanismen können indirekt über den ABS-Regler Einfluß auf P0 nehmen). Bei dem hier vorgestellten Konzept wird davon ausgegangen, daß PO entweder durch ein Druckmeßgerät erfaßt wird, oder daß beispielsweise bei Verwendung eines ABS-Druckmodulators nach dem Plungerprinzip ein direkter Zusammenhang zwischen der meßbaren Stellung des Vorderraddruckkolbens und dem relativen Vorderradbremsdruck besteht, so daß PO als Relativgröße aus der jeweiligen Kolbenstellung abgelesen werden kann.

P_ab = Vorderrad-Bremsdruck PO zum Zeitpunkt eines sicher erkannten Fahrzeugabhebens

delta_P1, delta_P2 = konstante (fahrzeugspezifische) Druckwerte zur Bildung von Umschaltwellen für die Steilheit der Druckanfahrt nach dem Ausregeln eines Fahrzeugabhebens

Abh1 = Anzeigesignal für Fahrzeugabheben (boolesches 1-bit-Signal, das logisch '1' wird, wenn ein Abhebefall gemäß a) oder b) vorliegt)

Abh2 = Anzeigesignal für Fahrzeugabheben (boolesches 1-bit-Signal, das logisch '1' wird, wenn ein Abhebefall gemäß c vorliegt)

StEnt = Steuersignal an den ABS-Regler: bewirkt eine steile Druckentlastung am Vorderrad

FlEnt = Steuersignal an den ABS-Regler: bewirkt eine flache Druckentlastung am Vorderrad

StBel = Steuersignal an den ABS-Regler: bewirkt eine steile Druckwiederbelastung am Vorderrad

FlBel = Steuersignal an den ABS-Regler: bewirkt eine flache Druckwiederbelastung am Vorderrad

ExFlBel = Steuersignal an den ABS-Regler: bewirkt eine extrem flache Druckwiederbelastung am Vorderrad

EINCNT = Zeitdauer eines Hinterrad-Geschwindigkeitseinbruchs

Startsignal = Startimpuls für die ABS-Regelung (boolesches 1-bit-Signal, das nur im ersten Zyklus einer jeden ABS-Regelung auf logisch '1' gesetzt wird und in allen anderen Zyklen auf logisch '0' liegt)

Regelungszyklustakt = Taktsignal, das mit der Zeitdauer eines ABS-Regelungszyklus (hier 8ms) geschaltet wird ==> 125 Hz

1g = Erdbeschleunigung = 9,81 m/s 2

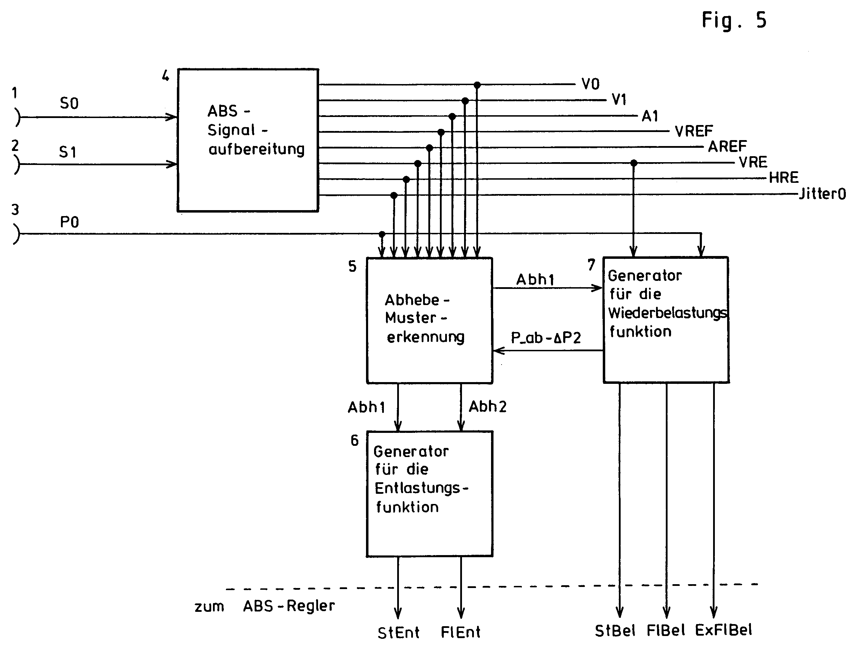

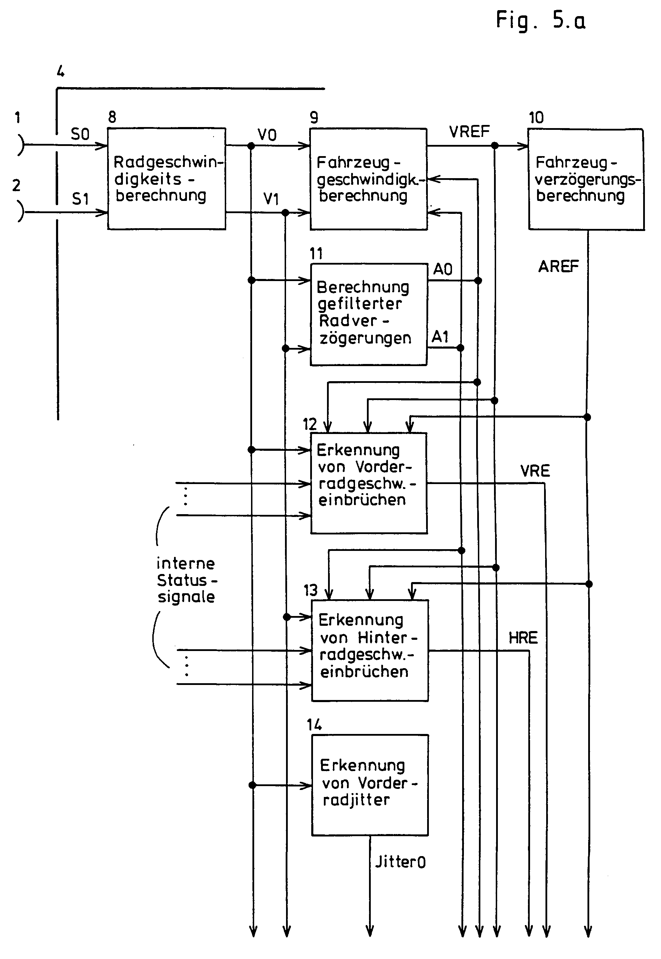

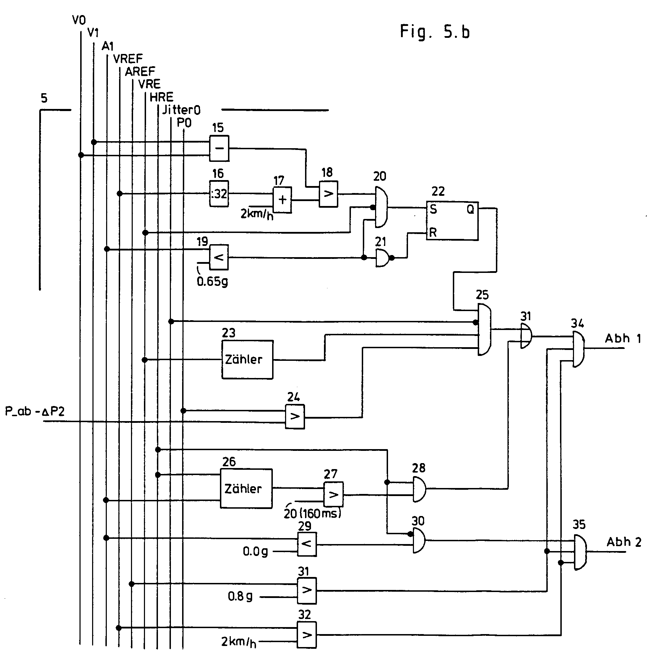

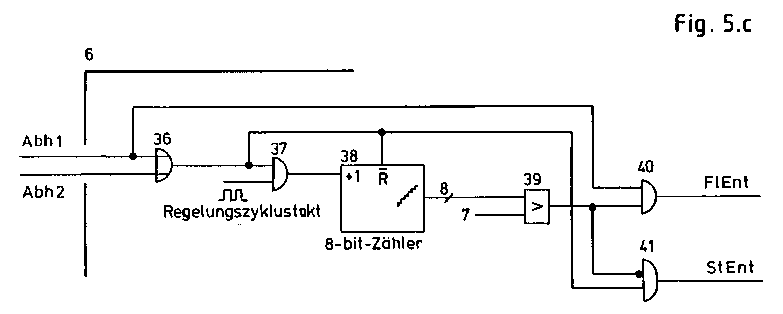

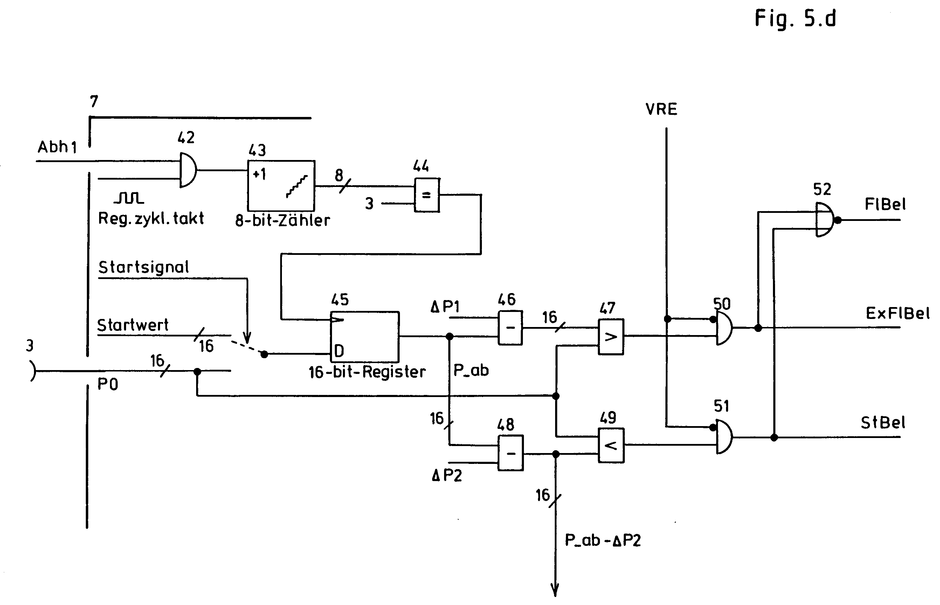

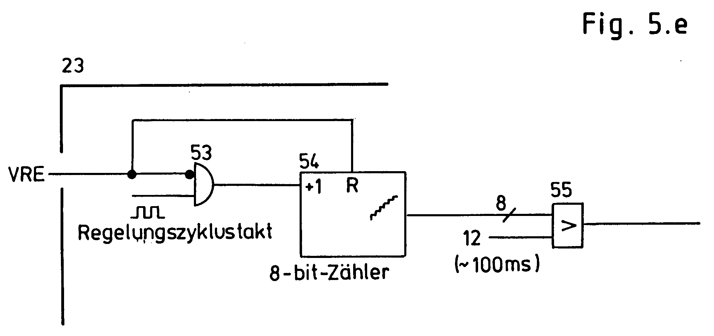

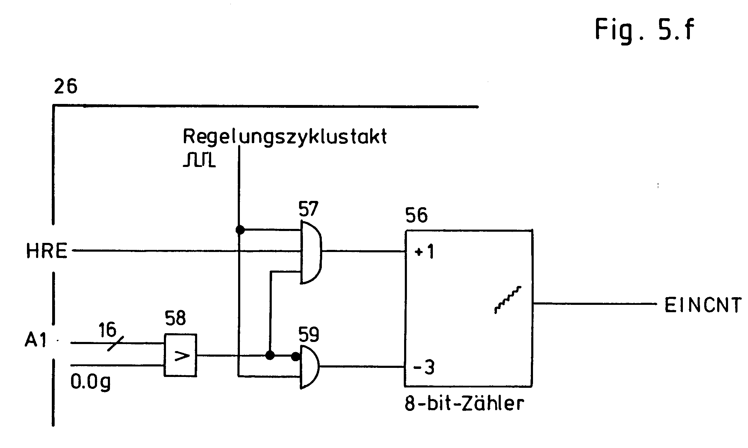

Dabei beinhaltet der Schaltungsblock 4 Unterblöcke 8-14 (s. Figur 5a), die der Bildung von internen ABS-Referenzsignalen dienen. Die Realisierung dieser Blöcke kann durch unterschiedliche bekannte Verfahren erzielt werden. Zum besseren Verständnis des Gesamtkonzepts werden aber nachfolgend kurz die Funktionen der Blöcke beschrieben.

Block 8 berechnet aus den Radsensorsignalen entsprechende Radgeschwindigkeiten VO und V1 für beide Räder. Aus diesen bildet der Block 11 gefilterte Radverzögerungen AO und A1, VO, V1, AO und A1 dienen als Eingangsgrößen für den Block 9, der eine angenäherte Fahrzeug-Referenzgeschwindigkeit VREF berechnet. Aus VREF erzeugt der Block 10 eine gefilterte Fahrzeug-Verzögerung AREF. Die Blöcke 12 und 13 ermitteln anhand der Signale VO, AO, VREF, AREF bzw. V1, A1. VREF, AREF und interner Statussignale, ob ein Rad mit einen zu großen Schlupf gebremst wurde und daher blockiergefährdet ist. Falls dies am Vorderrad der Fall ist, setzt der Block 12 das logische Signal VRE auf '1' (boolesch = true). Während der gesamten Ausregelzeit bleibt VRE = 1, bis sich das Rad wieder in einem stabilen Schlupfbereich befindet und wieder belastet werden kann. Der Block 13 setzt entsprechend das logische Signal HRE auf '1', während ein Hinterrad-Geschwindigkeitseinbruch stattfindet.

Der Schaltungsblock 14 schaltet eine 'O' auf seinen Ausgang, wenn die Vorderradgeschwindigkeit VO nur geringen Jitter aufweist. Bei oder unmittelbar nach dem Auftreten von starkem Jitter legt Block 14 eine '1' auf seinen Ausgang.

Der Schaltungsblock 5 (s. Figur 5.b) stellt den eigentlichen Abhebedetektor dar. Die internen Blöcke 15..35 überprüfen, ob eines der in beschriebenen Radgeschwindigkeitsmuster vorliegt.

Dazu bildet der Subtrahierer 15 die Radgeschwindigkeitsdifferenzen V1-VO. Der Dividierer 16 und der Addierer 17 bilden einen fahrzeuggeschwindigkeitsabhängigen Schwellwert 'VREF/32 + 2km/h' . Der Vergleicher 18 schaltet eine logische '1' auf seinen Ausgang, falls die Hinterradgeschwindigkeit V1 schon deutlich über der Vorderradgeschwindigkeit VO liegt, also die Bedingung 'V1-VO > VREF/32 + 2 km/h' erfüllt ist. Der Vergleicher 19 schaltet eine logische '1' auf seinen Ausgang, falls die Hinterradverzögerung relativ klein ist (A1 < 0.65g). Wenn die Vergleicher 18 und 19 beide eine '1' liefern und gleichzeitig kein Vorderradeinbruch vorliegt (also das Signal VRE logisch '0' ist), gibt das UND-Gatter 20 eine logische '1' aus und setzt damit das RS-Flipflop 22. Das Flipflop wird erst dann wieder zurückgesetzt, wenn der Vergleicher 19 feststellt,daß die gefilterte Hinterradverzögerung wieder größer als 0.65g geworden ist.

Damit hat das Ausgangssignal Q des Flipflops eine Informationsspeicherfunktion. Wenn das UND-Gatter 20 einmal eine '1' geliefert hat, wird dies als Information über ein möglicherweise erkanntes Abheben im Flipflop festgehalten, bis durch das Gatter 21 ein RESET ausgelöst wird, was inhaltlich bedeutet, daß die Abhebegefahr mit Sicherheit nicht mehr vorliegt.

Damit dieses Geschwindigkeitsmuster wirklich als Abhebeindiz gedeutet werden darf, werden über das UND-Gatter 25 drei zusätzliche Bedingungen abgeprüft:

Erstens muß der Vorderradjitter gering sein, Block 14 also eine 'O' liefern, da bei starkem Radjitter sehr leicht das obige Geschwindigkeitsmuster auftreten kann, ohne daß ein Abhebefall vorliegt.

Zweitens muß sichergestellt sein, daß eine vorherige überbremsungsbedingte Ausregelung eines Vorderradgeschwindigkeitseinbruchs mindestens ca. 100ms zurückliegt, da auch in der Folgezeit einer derartigen Ausregelung das obige Geschwindigkeitsmuster auftreten kann. Außerdem ist nach einer Vorderraddruckreduzierung nicht unmittelbar mit einem Abheben zu rechnen, wenn das Hinterrad ungebremst läuft. Dazu zählt der Block 23 mit seinen Unterblöcken 53-55 (s. Figur 5.e) die Regelungszyklen, die seit der vorherigen Vorderradausregelung vergangen sind, indem der 8-bit-Zähler 54 immer dann auf O zurückgesetzt wird, wenn das Signal 'VRE' noch '1' ist, also die Ausregelung noch stattfindet, und bei 'VRE =O' durch den Regelungszyklus inkrementiert wird. Der Ausgang des Blocks 23 liegt dann auf '1', wenn der Zähler mehr als 12 Zyklen gezählt hat, was über den Vergleicher 55 geprüft wird.

Drittens muß erfüllt sein, daß der erreichte Vorderradbremsdruck PO schon in der Nähe des früher bestimmten Abhebebremsdrucks P_ab liegt, also den Wert 'P_ab - delta _P2' überschritten hat, was auch den Vergleicher 24 geprüft wird.

Ob das mit der o. g. Schaltung erfaßte Geschwindigkeitsmuster tatsächlich durch ein abhebendes Hinterrad verursacht wurde, wird durch zwei weitere Test endgültig ermittelt. Diese Tests werden mit Hilfe der Vergleicher 32 und 33 ausgeführt. Vergleicher 32 prüft, ob die ermittelte Fahrzeugverzögerung über beispielsweise O.8g liegt (dieser Wert ist fahrzeugspezifisch), und Vergleicher 33 prüft, ob die Fahrzeuggeschwindigkeit mindestens nach 2km/h beträgt. Liefern beide Vergleicher eine logische '1' (Ereignis positiv) und schickt das UND-Gatter 25 ebenfalls eine '1' über das ODER-Gutter 31, so wird ein Abheben vermutet.

Das UND-Gatter 34 schaltet dann einen Drurkentlastungs-Kurvengenerator 6 aktiv, oder dem ABS-Regler die Anweisung gibt, nach einer bestimmten Zeitfunktion Druck abzubauen.

Die Druckentlastung endet, wenn das Geschwindigkeitsmuster eindeutig darauf schließen läßt, daß keine Abhebegefahr mehr vorliegt. Dies ist hier dann der Fall, wenn generell keine Fahrzeugverzögerung über 0.8g vorliegt oder das Fahrzeug bereits unter eine Geschwindigkeit von 2km/h heruntergebremst wurde oder nach erkanntem Abheben eine relativ große mittlere Hinterradverzögerung von mehr als 0.65g gemessen wurde, die als Indiz für wieder hinreichender Bodenkontakt angesehen werden kann.

Das zweite Geschwindigkeitsmuster, das auf eine Abhebesituation hindeutet, wird durch die Blöcke 26-28 mit den Unterblöcken 56-59 detektiert.

Dazu wird mit Hilfe des Zählers 56 die Zeitdauer ausgemessen, die der ABS-Algorithmus benötigt, um die Hinterradgeschwindigkeit nach einem überbremsungsbedingten Einbruch wieder auszuregeln. Bei sehr kleiner oder völlig fehlender Radaufstandskraft wird der Zeitbedarf entsprechend groß, da auch bei lokalem Bremsdruckabbau u.U. keine Ausregelung möglich ist. Der Zähler 56 zeigt also durch seinen jeweiligen Stand an, wie wahrscheinlich der Fall des Abhebens ist. Um dieser Aufgabe möglichst in allen Fällen gerecht zu werden, kann der Zähleratand auch verringert werden. Dies geschieht immer dann, wenn die gefilterte Hinterradverzögerung A1 negativ wird, also eine deutliche Radbeschleunigung vorliegt, die auf einen ausreichenden Bodenkontakt schließen läßt.

Bei leichtem Abheben und zwischenzeitlichem bodenwellenbedingtem Bodenkontakt kann das Hinterrad verzögert und kurzfristig wieder beschleunigt werden. In solchen Fällen ist es wichtig, daß das Abheben nicht sofort bei jeder punktuellen Radbeschleunigung als ausgeregelt betrachtet wird.

Der Zähler 56 inkremetiert deshalb seinen Zählerstand um 1 in jedem ABS-Regelungszyklus, in dem noch ein Hinterradeinbruch vorliegt (in diesem Fall ist das Signal HRE logisch '1') und die gefilterte Hinterradverzögerung A1 positiv ist (dies prüft der Vergleicher 58), das Rad also nicht deutlich beschleunigt. Das UND-Gatter 57 prüft diese Zustände und schaltet entsprechend den Regelungszyklustakt auf den Inkrementiereingang des Zählers 56. Falls A1 negativ wird, wird der Zählerstand über das UND-Gatter 59 mit jedem Regelungszyklustakt um 3 dekrementiert.

Der Vergleicher 27 gibt eine logische '1' an seinen Ausgang, wenn der Zählerstand EINCNT einen bestimmten Wert (hier 20) überschritten hat. Wenn gleichzeitig das Signal HRE aktiv ist, so liegt momentan noch ein Hinterradeinbruch vor, und das UND-Gatter 28 zeigt durch eine logische '1' an, daß ein Geschwindigkeitsmuster vorliegt, das auf einen Abhebefall hindeutet. Eine Druckentlastung wird aber nur dann über das UND-Gatter 34 eingeleitet, wenn gleichzeitig eine hohe Fahrzeugverzögerung vorliegt (dies schließt den Low-μ-Fall aus, in dem eine Hinterradausregelung u.U. relativ lange dauern könnte) und die Fahrzeuggeschwindigkeit noch über 2km/h liegt (s.o.).

Um den Grenzfall zu erfassen, dienen die Schaltkreise 29, 30. Sollte ein Hinterradgeschwindigkeitseinbruch scheinbar ausgeregelt worden sein, so daß das HRE-Signal auf logisch 'O' geht, ohne daß zuvor eine deutliche Radbeschleunigung stattgefunden hat (erkennbar an der über Vergleicher 29 abgefragten gefilterten Hinterradbeschleunigung A1 am Ende der Ausregelung), so liefert das UND-Gatter 30 eine logische '1'. Das UND-Gatter 35 erzeugt dann eine logische '1', wenn zusätzlich eine hohe Fahrzeugverzögerung vorliegt und die Fahrzeuggeschwindigkeit noch über 2km/h liegt. Das UND-Gatter 35 löst damit eine besondere Druckentlastungsmaßnahme aus.

Nach Ausregelung eines Abhebefalls muß der Bremsdruck am Vorderrad möglichst schnell wieder auf einen hohen Wert gefahren werden, ohne daß ein weiteres Abheben dadurch wieder provoziert wird. Nach dem vorliegenden Konzept generiert der Schaltungsblock 7 mit den Unterblöcken 42-52 eine geeignete Wiederbelastungsfunktion und gibt dem ABS-Regler entsprechende Steuersignale für die jeweilige Steilheit der Druckanfahrt.

Immer wenn ein eindeutiges Abheben (Abh = '1' für 3 Regelungszyklen) vorliegt, wird das 16-bit-Register 45 veranlaßt, den aktuellen Druckwert PO (der zum Abheben geführt hatte) als P_ab abzuspeichern. Daß bereits 3 Abhebeausregelungszyklen stattgefunden haben, wird über das UND-Gatter 42, den Zähler 43 und den Vergleicher 44 festgestellt, der dann eine logische '1' auf den Steuereingang des Registers schaltet, wenn der Zählerstand 3 beträgt. Zu Beginn einer ABS-Regelung (Startsignal = '1' im ersten Regelungszyklus) wird ein sehr hoher Start-Druckwert als P_ab eingespeichert.

Nach einem ausgeregelten Abheben dient der Wert von P_ab als Referenzdruck. Aus der Differenz des jeweils erreichten Vorderradbremsdrucks PO und des Referenzdrucks P_ab wird die Steilheit der Anfahrt von PO bestimmt.

Dies geschieht, indem der Subtrahierer 48 von P_ab einen hohen Betrag delta_P2 abzieht. Wenn PO noch unter diesem Wert liegt, liefert der 16-bit-Vergleicher 49 eine '1' und schaltet über das UND-Gatter 51 das Signal StBel auf '1', so daß dem ABS-Regler mitgeteilt wird, daß noch eine steile Druckanfahrt erforderlich ist, da der Druck PO noch weit unter dem Abbebedruckpunkt P_ab liegt.

Sollte PU schon sehr dicht unter oder über P_ab liegen, also PO > P_ab-delta_P1 erfüllt sein, wobei delta_P1 ein kleiner Druckbetrag ist, so schaltet das UND-Gatter 50 das Signal ExFlBel auf '1' und veranlaßt den ABS-Regler damit, eine ganz flache Druckanfahrt durchzuführen.

Liegt keines der Signale StBel und ExFlBel auf '1', so schaltet das ODER-Gatter (52) das Signal FlBel auf logisch '1', so daß eine normale flache Druckanfahrt stattfindet.

In der Praxis zeigt sich, daß der extrem flache Druckaufbau in der Nähe des vorliegenden Abhebedruckpunktes zu sehr guten Ergebnissen führt, da durch den extrem langsamen Druckanstieg im Bereich des optimalen Druckpunktes einerseits der Reifen einen sehr hohen Kraftschluß mit der Fahrbahnoberfläche eingehen kann und zudem durch die sehr ruhige erschütterungsfreie Verzögerung das Fahrzeug nicht zum Kippen angeregt wird.

Das Anfahren eines zuvor gemerkten Druckpunkte ist besonders bei ABS-Systemen nach dem Plunger-Prinzip völlig problemlos, da ein direkter Zusammenhang zwischen dem Bremsdruck und der meßbaren Stellung des Kolbens existiert.

Das Merken eines Druckpunktes wird also reduziert auf das Merken der Druckkolbenstellung, das Anfahren eines gemerkten Drucks wird durch Anfahren der gemerkten Druckkolbenstellung erreicht, ohne daß eine wirkliche Kenntnis der absoluten Drücke erforderlich ist.

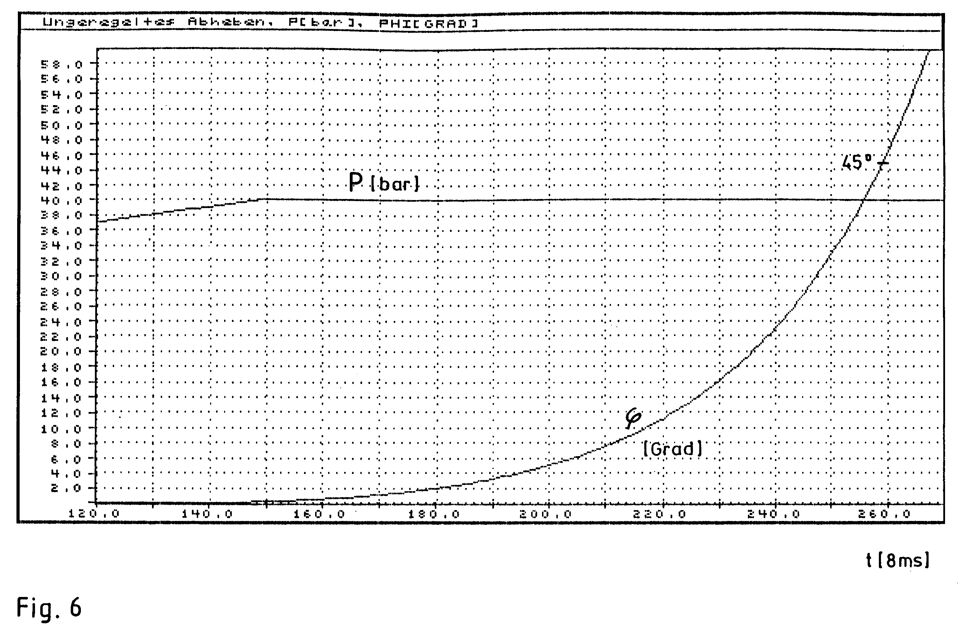

Das Zeitdiagramm in Figur 6 zeigt einen ungeregelten Abhebefall. Die Winkelstellung des Fahrzeugs steigt etwa quatratisch mit der Zeit an.

Bei einem gefederten Fahrzeug würde der Kippvorgang wesentlich schneller ablaufen, besonders bei steiler Druckanfahrt. Um große Kippwinkel mit Hilfe einer Antriebhebe-Einrichtung zu vermeiden, ist also auch eine schnell wirkende Druckabbaufunktion erforderlich.

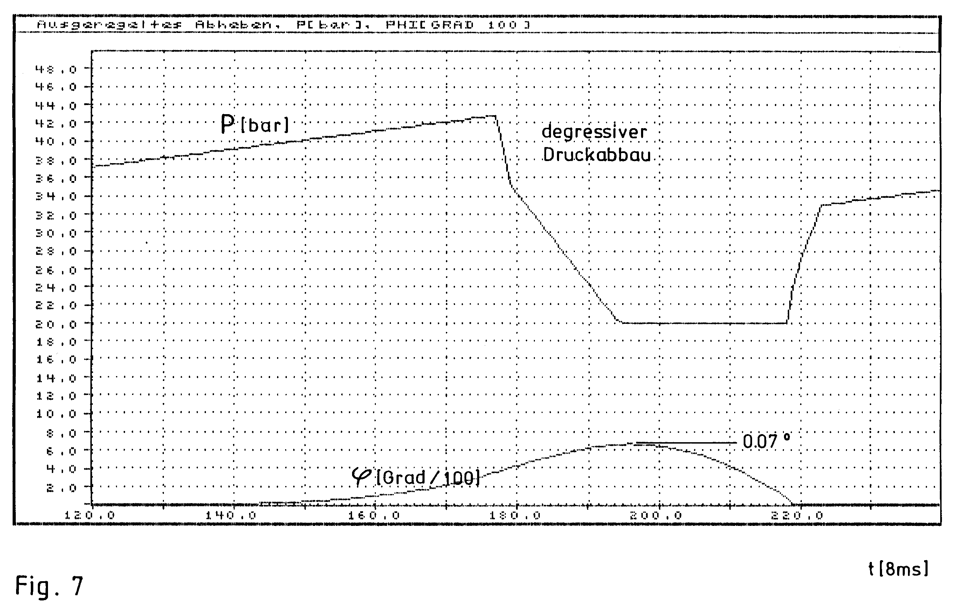

Figur 7 zeigt beispielhaft eine Ausregelung.

Wenn die Abhebegefahr behoben ist, wird ein Druckaufbau eingeleitet, der anfangs steil und später flach verläuft, ähnlich wie der normale Durckaufbau nach der Ausregelung eines Radblockierens.

Im Schaltbild der Figur 5 übernimmt der Funktionsblock 6 mit den Unberblöcken 36-41 die Aufgabe, eine Entlastungsfunktion über der Zeit zu generieren und dem ABS-Regler durch die Steuersignale 'StEnt' und FlEnt' mitzuteilen, ob eine steile Entlastung des Vorderraddrucks (StEnt = '1') oder eine flache Entlastung (FlEnt = '1') erfolgen soll.

Dazu wird der 8-bit-Zähler 38 immer dann auf '0' gesetzt, wenn kein Abhebefall erkannt wird, das ODER-Gatter 36 also eine 'O' ausgibt. Sobald ein Abhebefall durch Abh1 = '1' oder Abh2 = '1'angezeigt wird, wird der Zähler mit dem Regelungszyklusakt über das UND-Gatter 37 hochgezählt.

Der 8-bit-Vergleicher 39 legt eine logische 'O' auf seinen Ausgang, solange der Zählerstand noch kleiner oder gleich 7 ist, so daß das Signal StEnt durch das UND-Gatter 41 auf logisch '1' gesetzt wird, was dem ABS-Regler in den ersten 7 Entlastungszyklen anzeigt, daß eine starke Entlastung durchzuführen ist.

Wenn der Zählerstand den Wert 7 überschreitet, und ein Abhebefall nach einem der in a) oder b) beschriebenen Muster vorliegt (Abh1 = '1'), so schaltet das UND-Gatter 40 das Signal für die flache Entlastung 'FlEnt" auf '1'. Somit wird im Falle des Abhebemusters nach c) (Abh2 = '1') nur die steile Entlastung der ersten 7 Zyklen durchgeführt, ohne daß eine Abschaltbedingung für diese Maßnahme erforderlich ist, während für Abh1 = '1' eine zuerst steile und anschließend flache Entlastung erfolgt, bis das verursachende Geschwindigkeitsmuster nicht mehr vorliegt.

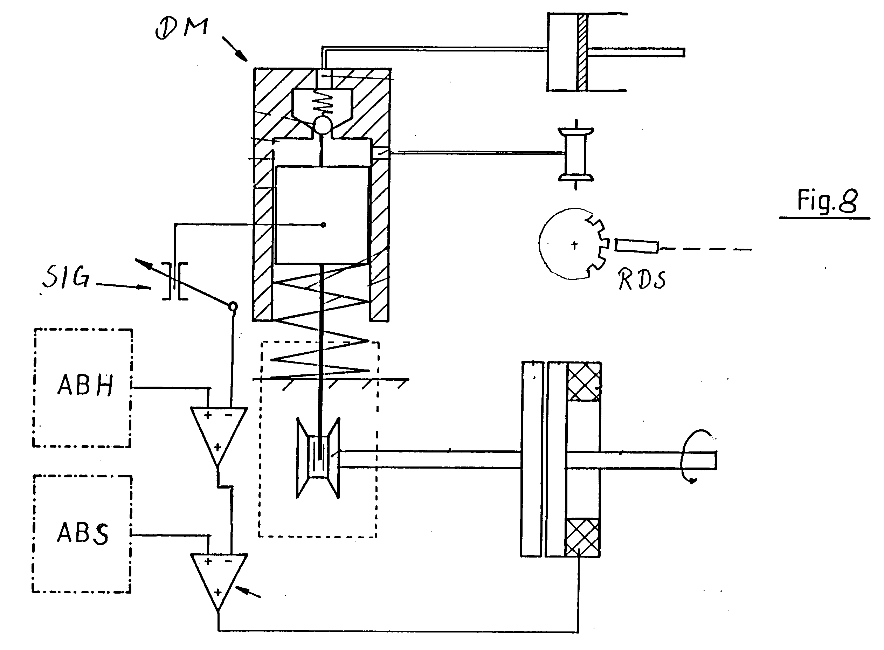

In Figur 8 ist schematisch eine erfindungsgemäße Vorrichtung dargestellt. Sie besteht im wesentlichen aus Raddrehzahlsensoren RDS, Mikroprozessen ABH und ABS, Druckmodulatoren DM und Signalgebern SIG. Die Funktionsweise des Druckmodulators entspricht im wesentlichen der, wie sie in der eingangs genannten DE-OS 35 30 280 beschrieben ist, so daß hier nicht näher darauf eingegangen wird. Neu ist dabei, daß der Druckmodulator DM des Vorderradbremskreises neben den Blockiersignalen ABS auch von den Abhebesignalen ABH betätigbar ist. Dabei ist vorteilhaft, daß die Stellung des Druckentlastungskolbens über das Signal SIG direkt in den Wert des Vorderradbremsdruckes umgerechnet werden kann.

**Patentansprüche**

1. Verfahren zur Bremskraftregelung von Motorrädern, wobei die Radumfangsgeschwindigkeiten von Sensoren erfaßt und von einem Mikroprozessor ausgewertet werden, der ein Blockiersignal an einen Druckmodulator gibt, wenn bestimmte Verzögerrungsgrenzwerte über- oder unterschritten werden und wenn innerhalb einer vorgegebenen Zeit ein die Bodenhaftung des Hinterrades symbolisierendes Abhebesignal nicht auftritt, woraufhin der Druckmodulator den Druck im vorderen Bremskreis reduziert, **dadurch gekennzeichnet**, daß das Abhebesignal gegeben wird, wenn

    a.

    - die Fahrzeugverzögerung einen vorgegebenen Maximalbetrag überschreitet und

    - die Hinterradgeschwindigkeit um einen Mindestbetrag größer ist als die Vorderradgeschwindigkeit und

    - bei nicht gebremstem Hinterrad die Hinterradverzögerung einen Minimalbetrag unterschreitet

    oder

    b.

    - die Fahrzeugverzögerung einen Maximalbetrag überschreitet und bei gebremstem Hinterrad

    - ein Hinterradeinbruch in einer vorgegebenen Zeit trotz Druckreduzierung nicht ausgeregelt wird

    oder

    c.

    - die Fahrzeugverzögerung einen Maximalbetrag überschreitet und

    - ein flacher Hinterradeinbruch ohne hinreichende Radbeschleunigung beendet wurde.

2. Verfahren zur Bremskraftregelung von Motorrädern nach Anspruch 1, dadurch gekennzeichnet, daß bei gegebenem Abhebesignal der Vorderradbremsdruck nach einer vorgegebenen Zeitfunktion reduziert wird bis kein neues Abhebesignal mehr gegeben wird.

3. Verfahren nach Anspruch 1, **dadurch gekennzeichnet**, daß kein Abhebesignal mehr gegeben wird, wenn im Fall 1a die Hinterradverzögerung wieder einen vorgegebenen Schwellenwert überschreitet, im Fall 1b die Hinterradbeschleunigung wieder einen minimalen Schwellenwert überschreitet oder im Fall 1c eine Druckreduzierung am Vorderrad um einen vorgegebenen ggf. fahrzeugspezifischen Betrag bereits erfolgte.

4. Verfahren nach Anspruch 1, dadurch gekennzeichnet, daß nach Vorliegen eines Blockiersignals am Vorderrad das Abhebesignal für eine bestimmte Zeit ignoriert wird.

5. Verfahren nach Anspruch 1, dadurch gekennzeichnet, daß nach Vorliegen eines Radjittersignals das Abhebesignal für eine bestimmte Zeit ignoriert wird.

6. Verfahren nach Anspruch 1, dadurch gekennzeichnet, daß der Wert des Vorderradbremsdruckes beim Auftreten des Abhebesignals abgespeichert wird.

7. Verfahren nach Anspruch 1, dadurch gekennzeichnet, daß der Wert des Vorderradbremsdruckes über die Stellung des Druckentlastungskolbens bestimmt wird.

8. Verfahren nach Anspruch 1, dadurch gekennzeichnet, daß bei Vorliegen eines Blockiersignals und eines Radaufstandssignales der Vorderradbremsdruck nach einer Zeitfunktion bis zum Wert des abgespeicherten Vorderradbremsdruckes erhöht wird.

**9.** Verfahren nach Anspruch 8, <u>dadurch gekennzeichnet</u>, daß die Druckwiederbelastung im Wertbereich des abgespeicherten Vorderradbremsdruckes mit geringem Druckanstieg erfolgt.

**10.** Vorrichtung zur Bremskraftregelung von Motorrädern, bestehend aus Raddrehzahlsensoren (RDS), Mikroprozessoren (ABH, ABS), Druckmodulatoren (DM) und Signalgebern (SIG) und gegebenenfalls Schaltventilen, wobei der Druckmodulator (DM) des Vorderradbremskreises neben den Blockiersignalen auch von Abhebesignalen betätigbar ist, **dadurch gekennzeichnet**, daß Mittel vorgesehen sind, die ein Abhebesignal abgeben, wenn

    a.

-    die Fahrzeugverzögerung einen vorgegebenen Maximalbetrag überschreitet und

-    die Hinterradgeschwindigkeit um einen Mindestbetrag größer ist als die Vorderradgeschwindigkeit und

-    bei nicht gebremstem Hinterrad die Hinterradverzögerung einen Minimalbetrag unterschreitet

    oder
    b.

-    die Fahrzeugverzögerung einen Maximalbetrag überschreitet und bei gebremstem Hinterrad

-    ein Hinterradeinbruch in einer vorgegebenen Zeit trotz Druckreduzierung nicht ausgeregelt wird

    oder
    c.

-    die Fahrzeugverzögerung einen Maximalbetrag überschreitet und

-    ein flacher Hinterradeinbruch ohne hinreichende Radbeschleunigung beendet wurde.

## Claims

**1.** Method of regulating the braking force of motor cycles, wherein the wheel peripheral speeds are detected by sensors and evaluated by a microprocessor, which supplies a blocking signal to a pressure modulator when the deceleration is above or below specific limiting values and when, within a predetermined period, a lift-off signal symbolizing the road grip of the rear wheel does not occur, whereupon the pressure modulator reduces the pressure in the front brake circuit, characterized in that the lift-off signal is emitted when

    a.

-    the vehicle deceleration exceeds a predetermined maximum value and
-    the rear wheel speed is greater, by a minimum amount, than the front wheel speed and
-    with the rear wheel not braked, the rear wheel deceleration falls below a minimum value

    or

    b.

-    the vehicle deceleration exceeds a maximum value and, with the rear wheel braked,
-    a rear wheel failure is not stabilized within a predetermined time in spite of pressure reduction,

    or

    c.

-    the vehicle deceleration exceeds a maximum value and

-    a flat rear wheel failure has been terminated without sufficient wheel acceleration.

2. Method of regulating the braking force of motor cycles according to Claim 1, characterized in that, with a given lift-off signal, the front wheel brake pressure is reduced according to a predetermined time function until no new lift-off signal is any longer emitted.

3. Method according to Claim 1, characterized in that no lift-off signal is any longer emitted when, in case 1a, the rear wheel deceleration again exceeds a predetermined threshold value, in case 1b the rear wheel acceleration again exceeds a minimal threshold value or, in case 1c, a pressure reduction at the front wheel by a predetermined or vehicle-specific value has already taken place.

4. Method according to Claim 1, characterized in that, after the presence of a blocking signal at the front wheel, the lift-off signal is ignored for a specific period.

5. Method according to Claim 1, characterized in that, after the presence of a wheel jitter signal, the lift-off signal is ignored for a specific period.

6. Method according to Claim 1, characterized in that the value of the front wheel brake pressure is stored when the lift-off signal occurs.

7. Method according to Claim 1, characterized in that the value of the front wheel brake pressure is determined from the position of the pressure-relief piston.

8. Method according to Claim 1, characterized in that, when a blocking signal and a wheel-road contact signal are present, the front wheel brake pressure is increased according to a time function up to the value of the stored front wheel brake pressure.

9. Method according to Claim 8, characterized in that the pressure reloading takes place in the value range of the stored front wheel brake pressure with a low pressure rise.

10. Apparatus for regulating the braking force of motor cycles, consisting of wheel rotational speed sensors (RDS), micro-processors (ABH, ABS), pressure modulators (DM) and signal transmitters (SIG) and, if required, switching valves, wherein the pressure modulator (DM) of the front wheel brake circuit can be actuated not only by the blocking signals but also by lift-off signals, characterized in that means are provided which emit a lift-off signal, when

   a.

   - the vehicle deceleration exceeds a predetermined maximum value and
   - the rear wheel speed is larger, by a minimum amount, than the front wheel speed and
   - with the rear wheel not braked, the rear wheel deceleration falls below a minimum value,

   or

   b.

   - the vehicle deceleration exceeds a maximum value and, with the rear wheel braked,
   - a rear wheel failure is not stabilized within a predetermined time in spite of pressure reduction,

   or

   c.

   - the vehicle deceleration exceeds a maximum value and
   - a flat rear wheel failure has been terminated without sufficient wheel acceleration.

## Revendications

1. Procédé pour la régulation de force de freinage de motos, les vitesses périphériques de roue devenant détectées par les capteurs et devenant évaluées par un microprocesseur, qui donne un signal de blocage à un modulateur de pression, lorsque des valeurs de décélération déterminées seront franchies ou ne seront pas atteintes, et lorsque, à l'intérieur d'un temps préalloué, un signal de décollement, symbolisant l'adhérence au sol de la roue arrière, ne survient pas, après quoi, le modulateur de pression réduit la pression dans le circuit de freinage avant, <u>caractérisé en ce</u>, que le signal de décollement sera donné, lorsque

a.

- la décélération de véhicule franchit un montant maximal préalloué, et
- la vitesse de roue arrière est plus grande d'un montant minimal que la vitesse de roue avant, et
- lors de roue arrière non freinée, la décélération de roue arrière passe au-dessous d'un montant minimal,
      ou

b.

- la décélération de véhicule franchit un montant maximal et, lors de roue arrière freinée,
- un affaissement de roue arrière, dans un temps préalloué, malgré une réduction de pression, n'est pas complètement régulé,
      ou

c.

- la décélération de véhicule franchit un montant maximal, et
- un affaissement de roue arrière plat, sans accélération de roue suffisante, a été terminé.

2. Procédé pour la régulation de force de freinage de motos selon la revendication 1, <u>caractérisé en ce</u>, que, lors de signal de décollement donné, la pression de freinage de roue avant, selon une fonction de temps préallouée, sera réduite jusqu'à ce qu'aucun nouveau signal de décollement ne sera plus donné.

3. Procédé selon la revendication 1, <u>caractérisé en ce</u>, qu'aucun signal de décollement ne sera plus donné, lorsque, dans le cas 1a, la décélération de roue arrière franchit à nouveau une valeur de seuil préallouée, dans le cas 1b, l'accélération de roue arrière franchit à nouveau une valeur de seuil minimale, ou, dans le cas 1c, une réduction de pression à la roue avant a lieu déjà d'un montant préalloué, le cas échéant d'un montant spécifique au véhicule.

4. Procédé selon la revendication 1, <u>caractérisé en ce</u>, qu'après présence d'un signal de blocage à la roue avant, le signal de décollement sera ignoré pour un temps déterminé.

5. Procédé selon la revendication 1, <u>caractérisé en ce</u>, qu'après présence d'un signal d'instabilité horizontal de roue, le signal de décollement sera ignoré pour un temps déterminé.

6. Procédé selon la revendication 1, <u>caractérisé en ce</u>, que la valeur de la pression de freinage de roue avant, lors de l'apparition du signal de décollement, sera mise en mémoire.

7. Procédé selon la revendication 1, <u>caractérisé en ce</u>, que la valeur de la pression de freinage de roue avant sera déterminée par l'intermédiaire de la position du piston de décharge de pression.

8. Procédé selon la revendication 1, <u>caractérisé en ce</u>, que lors de présence d'un signal de blocage et d'un signal de soulèvement de roue, la pression de freinage de roue avant, selon une fonction de temps, sera accrue jusqu'à la valeur de la pression de freinage de roue avant mise en mémoire.

9. Procédé selon la revendication 8, <u>caractérisé en ce</u>, que la charge à nouveau de pression a lieu, dans la plage de valeur de la pression de freinage de roue avant mise en mémoire, avec faible montée de pression.

10. Procédé pour la régulation de force de freinage de motos, consistant en : des capteurs de vitesse de rotation de roue (RDS), des microprocesseurs (ABH, ABS), des modulateurs de pression (DM) et des émetteurs de signal (SIG), et, le cas échéant, des vannes de commutation, le modulateur de pression (DM) du circuit de freinage de roue avant, à côté des signaux de blocage, étant aussi susceptibles d'être actionnés par des signaux de décollement, <u>caractérisé en ce</u>, que des moyens sont prévus, qui délivrent un signal de décollement, lorsque

a.

- la décélération de véhicule franchit un montant maximal préalloué, et

EP 0 537 724 B1

- la vitesse de roue arrière est plus grande d'un montant minimal que la vitesse de roue avant, et
- lors de roue arrière non freinée, la décélération de roue arrière passe au-dessous d'un montant minimal,

ou

b.

- la décélération de véhicule franchit un montant maximal et, lors de roue arrière freinée,
- un affaissement de roue arrière, dans un temps préalloué, malgré une réduction de pression, n'est pas complètement régulé,

ou

c.

- la décélération de véhicule franchit un montant maximal, et
- un affaissement de roue arrière plat, sans accélération de roue suffisante, a été terminé.

l' < l          h' > h

S'

S

h'    h
     hsa

rrad

φ

l'

l

tsa

G

EP 0 537 724 B1

Fig. 1

Fig. 2

↑ Geschwindigkeit v

$V_0$

$V_1$

Zeitpunkt,
zu dem spätestens
eine Radbeschleunigung
erwartet wird

$T_{he}$  $T_{ab}$

Zeit t

Fig. 3

Geschwindigkeit  v

$V_0$

$V_1$

Zeitpunkt,
scheinbarer
Einbruchsausregelung

$T_{he}$          $T_{sts}$          Zeit  t

Fig. 4

Fig. 5

EP 0 537 724 B1

Fig. 5.a

Fig. 5.b

Fig. 5.c

EP 0 537 724 B1

6

Abh 1

Abh 2

36

37

Regelungszyklustakt

38

+1    R̄

8-bit-Zähler

8

7

39

>

40

FlEnt

41

StEnt

Fig. 5.d

Fig. 5.e

23

VRE

Regelungszyklustakt

53

54
+1    R

8-bit-Zähler

8

55
>

12
(~100ms)

EP 0 537 724 B1

Fig. 5.f

EP 0 537 724 B1

Fig. 6

EP 0 537 724 B1

Fig. 7

Fig.8